# Europäisches Patentamt

## European Patent Office

## Office européen des brevets

(19)

(11) Veröffentlichungsnummer: **0 041 207**
**B1**

(12) **EUROPÄISCHE PATENTSCHRIFT**

(45) Veröffentlichungstag der Patentschrift:
**12.09.84**

(51) Int. Cl.³: **A 01 F 12/30**

(21) Anmeldenummer: **81103981.7**

(22) Anmeldetag: **23.05.81**

(54) Gekröpfte Schüttlerwelle für Mähdrescher.

(30) Priorität: **02.06.80 DE 3020811**

(43) Veröffentlichungstag der Anmeldung:
**09.12.81 Patentblatt 81/49**

(45) Bekanntmachung des Hinweises auf die Patenterteilung:
**12.09.84 Patentblatt 84/37**

(84) Benannte Vertragsstaaten:
**BE DE FR GB IT**

(56) Entgegenhaltungen:
**DE - A - 2 438 528**
**DE - B - 2 419 940**
**DE - C - 439 562**
**DE - C - 1 148 099**
**US - A - 1 682 315**
**US - A - 2 471 982**

**PARTS CATALOG PC-4161, 20. Juli 1979 J. DEERE & CO.**

(73) Patentinhaber: **DEERE & COMPANY, 1 John Deere Road, Moline Illinois 61265 (US)**

(72) Erfinder: **Dannigkeit, Helmut, Dipl.-Ing., Haus Nr. 11, D-2134 Horstedt (DE)**

(74) Vertreter: **Sartorius, Peter et al, DEERE & COMPANY European Office, Patent Department Postfach 503 Steubenstrasse 36-42, D-6800 Mannheim 1 (DE)**

ACTORUM AG

## Beschreibung

Die Erfindung bezieht sich auf eine gekröpfte, einteilige Schüttlerwelle mit horizontal verlaufenden und mit schräg verlaufenden Schüttlerwellenabschnitten zum Antrieb mehrerer nebeneinander angeordneter Schüttler für einen Mähdrescher, in dessen Seitenwänden die Enden der Schüttlerwelle drehbar gelagert sind, wobei die Schüttlerwelle zwischen ihren beiden äusseren Lagern über mindestens ein zusätzliches Lager abgestützt ist, dessen Mittellinie auf der geometrischen Mittellinie der Schüttlerwelle liegt und dessen Lagerfläche parallel zur geometrischen Mittellinie verläuft.

Es ist bereits eine gekröpfte Schüttlerwelle für Mähdrescher bekannt, die für mehrere nebeneinander angeordnete Schüttler ausgelegt und endseitig in den Seitenwänden des Mähdreschers drehbar gelagert ist. Um Schüttlerwellen festigkeitsmässig optimal auszulegen, dürfen sie weder zu schwach noch zu stark dimensioniert sein, damit im kritischen Drehzahlbereich infolge von Resonanzschwingungen kein Bruch an der Schüttlerwelle auftritt. Aus diesem Grunde ist es nicht ohne weiteres möglich, relativ lange Schüttlerwellen entsprechend stärker zu dimensionieren (siehe John Deere Parts Catalogue PC–4161, 20. Juli 1979, Seite 120–062).

Ferner ist eine Schüttlerwelle für einen Mähdrescher bekannt (DE–A–2 438 528), die für sechs nebeneinander angeordnete Horden ausgelegt ist und hierzu zweigeteilt ist. Im mittleren Bereich sind die gegenüberliegenden Enden der zweigeteilten Kurbelwelle in einem Lager aufgenommen. Die Verwendung von zwei nebeneinander liegenden Kurbelwellen ist in der Herstellung sowie in der Lagerhaltung wesentlich teurer als einteilige Kurbelwellen.

Ausserdem ist eine Rüttelwelle zum Antrieb von Siebkörben mittels vier an die Rüttelwelle angeschlossenen Pleuelstangen bekannt (DE–C–439 562). Die Rüttelwelle ist in Endlagern sowie in einem Mittellager drehbar aufgenommen. Diese Lager sind auf einem gemeinsamen rechteckförmigen, starren und sehr aufwendigen Rahmen befestigt. Eine derartige Abstützung der Rüttelwelle erfordert einen enormen Platz, so dass sie zum Einbau in einen Mähdrescher mit dicht nebeneinander liegenden Hordenschüttlern ungeeignet ist.

Demgegenüber ist es Aufgabe der vorliegenden Erfindung, sehr starke auf Resonanzschwingungen und Stösse beanspruchte Schüttlerwellen kostengünstiger herzustellen.

Diese Aufgabe ist dadurch gelöst worden, dass bei einer Schüttlerwelle der eingangs genannten Art das zusätzliche Lager den zwischen zwei horizontal verlaufenden Schüttlerwellenabschnitten schräg verlaufenden Schüttlerwellenabschnitt aufnimmt. Da das zusätzliche Lager am schräg verlaufenden Schüttlerwellenabschnitt vorgesehen ist, kann auch bei sehr dicht nebeneinander liegenden Schüttlern ein Lager verwendet werden, ohne dass an den konventionellen Schüttlern selbst Veränderungen vorgenommen zu werden brauchen. Ausserdem wird durch die vorteilhafte Anordnung des Lagers kein zusätzlicher Raum beansprucht, der sonst eine Verbreiterung des Mähdreschergehäuses zur Folge hätte. Gemäss der Erfindung ist es vorteilhaft, dass der schräg verlaufende Schüttlerwellenabschnitt einen Lagerring aufweist, dessen Mittellinie auf der geometrischen Mittellinie der Schüttlerwelle liegt. In vorteilhafter Weise kann der Lagerring geteilt oder einteilig ausgebildet sein. Ferner ist es vorteilhaft, dass der schräg verlaufende Schüttlerwellenabschnitt eine Abkröpfung mit einer parallel zur geometrischen Mittellinie verlaufenden Lagerfläche aufweist. Durch die Verwendung einer Abkröpfung im schräg verlaufenden Schüttlerwellenabschnitt können zusätzlich Kosten eingespart werden, da auf einen Lagering verzichtet werden kann.

In weiterer Ausgestaltung der Erfindung ist es vorteilhaft, dass das zusätzliche Lager als Wälzlager ausgebildet ist.

Anhand der Zeichnung werden mehrere Ausführungsbeispiele einer Schüttlerwelle für mehrere nebeneinander angeordnete Schüttler nach der Erfindung erläutert.

Es zeigt:

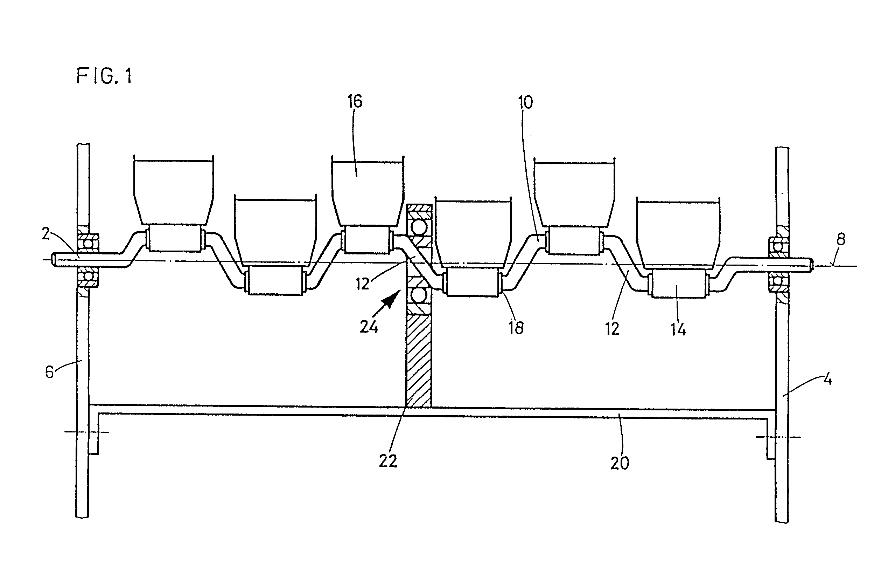

Fig. 1 eine Schüttlerwelle, die in den Seitenwänden eines Mähdreschers und in einem mittleren Lager aufgenommen ist,

Fig. 2 eine Lagerstelle für eine Schüttlerwelle im grösseren Masstab,

Fig. 3 ein zweites Ausführungsbeispiel einer Lagerstelle mit einer Abkröpfung im schräg verlaufenden Schüttlerwellenabschnitt im grösseren Masstab.

In der Zeichnung ist mit 2 eine Schüttlerwelle bezeichnet, die in zwei mit Abstand zueinander angeordneten Seitenwänden 4 und 6 eines in der Zeichnung nicht weiter dargestellten Mähdreschers drehbar aufgenommen ist. Die Schüttlerwelle 2 dreht sich um eine geometrische Mittellinie 8 und besteht im einzelnen aus mehreren versetzt zueinander angeordneten Schüttlerwellenabschnitten 10, die über schräg verlaufende Schüttlerwellenabschnitte 12 miteinander verbunden sind. Der horizontal verlaufende Schüttlerwellenabschnitt 10 dient zur Aufnahme von Lagern 14 von Schüttlern 16. Die Lager 14 der Schüttler 16 sind seitlich über Führungsringe 18 gesichert, so dass ein seitliches Verschieben der Lager 14 auf den Schüttlerwellenabschnitten 10 vermieden wird.

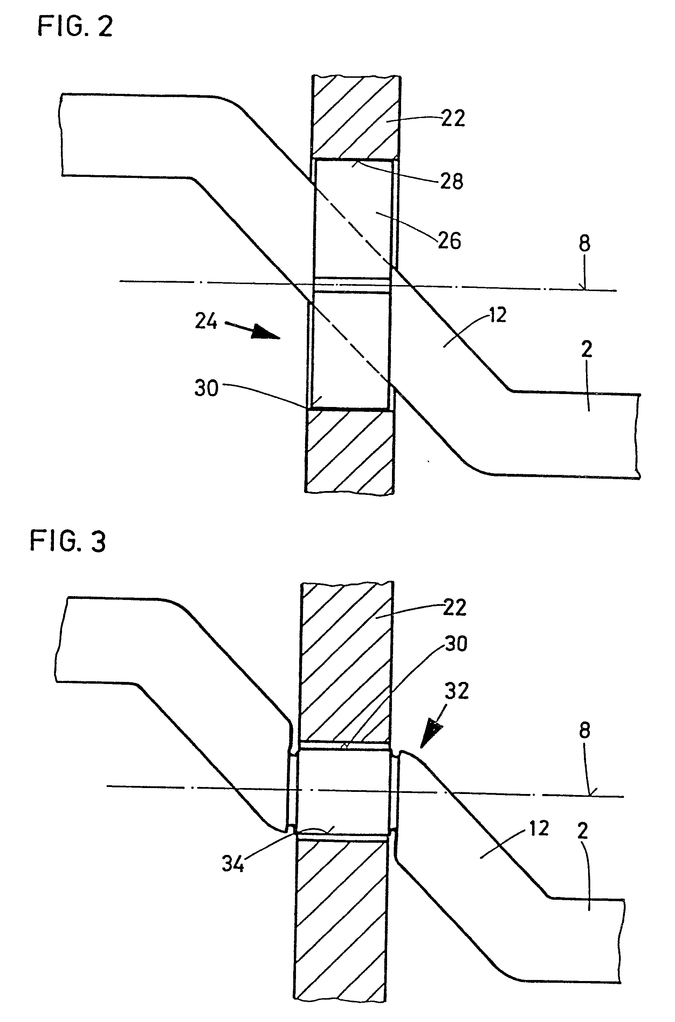

Unterhalb der Schüttlerwelle 2 befindet sich ein Querträger 20, der endseitig ebenfalls mit den Seitenwänden 4 und 6 des Mähdreschers verbunden ist. Der Querträger 20 dient zur Aufnahme einer Stütze 22, die ein Lager 24 trägt, das beispielsweise als Wälzlager oder als Gleitlager ausgebildet sein kann. Das Lager 24 liegt in etwa mittig zwischen zwei horizontal verlaufenden Schüttlerwellenabschnitten 10 und umgreift den schräg verlaufenden Schüttlerwellenabschnitt 12. Wie aus Fig. 2 hervorgeht, kann das Lager 24 aus einem geteilten, aus zwei Abschnitten bestehendem Lagerring 26 gebildet sein, der eine Aussenlagerfläche 28 aufweist, die parallel zur geometrischen Mittellinie 8 der Schüttlerwelle 2 verläuft. In vorteilhafter Weise ist der Lagerring 26 so angeordnet, dass er ebenfalls auf der geometrischen Mittellinie 8 liegt. Auf diese Weise kann auf einen exzentrischen Lagerring verzichtet werden. Somit kann auch der Lagerring 26 gegenüber exzentrisch ausgebildeten Lagerringen wesentlich kleiner hergestellt werden. Der Lagerring 26 ist in einer in der Stütze 22 vorgesehenen Bohrung 30 fest aufgenommen.

Anstelle des in Fig. 2 dargestellten Lagerringes 26 kann auch der schräg verlaufende Schüttlerwellenabschnitt 12 mit einer Abkröpfung 32 versehen sein, die ebenfalls mit einer Aussenlagerfläche 34 ausgerüstet ist, deren Mittelachse wiederum auf der geometrischen Mittellinie 8 der Schüttlerwelle 2 liegt (Fig. 3). Die Abkröpfung 32 lagert in der Bohrung 30 der Stütze 22. Damit die Abkröpfung 32 in die Bohrung 30 eingebracht werden kann, ist die Stütze 22 im Bereich ihrer Bohrung als geteiltes Lagerauge ausgebildet.

**Patentansprüche**

1. Gekröpfte, einteilige Schüttlerwelle (2) mit horizontal verlaufenden (10) und mit schräg verlaufenden (12) Schüttlerwellenabschnitten zum Antrieb mehrerer nebeneinander angeordneter Schüttler (16) für einen Mähdrescher, in dessen Seitenwänden (4, 6) die Enden der Schüttlerwelle (2) drehbar gelagert sind, wobei die Schüttlerwelle (2) zwischen ihren beiden äusseren Lagern über mindestens ein zusätzliches Lager (24) abgestützt ist, dessen Mittellinie auf der geometrischen Mittellinie (8) der Schüttlerwelle (2) liegt und dessen Lagerfläche (28, 34) parallel zur geometrischen Mittellinie (8) verläuft, dadurch gekennzeichnet, dass das zusätzliche Lager (24) den zwischen zwei horizontal verlaufenden Schüttlerwellenabschnitten (10) schräg verlaufenden Schüttlerwellenabschnitt (12) aufnimmt.

2. Schüttlerwelle nach Anspruch 1, dadurch gekennzeichnet, dass der schräg verlaufende Schüttlerwellenabschnitt (12) einen Lagerring (26) aufweist, dessen Mittellinie auf der geometrischen Mittellinie (8) der Schüttlerwelle (2) liegt.

3. Schüttlerwelle nach Anspruch 2, dadurch gekennzeichnet, dass der Lagerring (26) geteilt oder einteilig ausgebildet ist.

4. Schüttlerwelle nach Anspruch 1, dadurch gekennzeichnet, dass der schräg verlaufende Schüttlerwellenabschnitt (12) eine Abkröpfung (32) mit einer parallel zur geometrischen Mittellinie (8) verlaufenden Lagerfläche (34) aufweist.

5. Schüttlerwelle nach Anspruch 1, dadurch gekennzeichnet, dass das zusätzliche Lager (24) als Wälzlager ausgebildet ist.

**Claims**

1. A cranked, one-pat shaker shaft (2) having horizontally extending shaker shaft portions (10) and inclinedly extending shaker shaft portions (12) for driving a plurality of juxtaposed shakers (16) for a combine harvester, in the side walls (4, 6) of which the ends of the shaker shaft (2) are rotatably mounted, wherein the shaker shaft (2) is supported between its two outer bearings by way of at least one additional bearing (24), the centre line of which is on the geometrical centre line (8) of the shaker shaft (2) and the bearing surface (28, 34) of which extends parallel to the geometrical centre line (8), characterised in that the additional bearing (24) accommodates the shaker shaft portion (12) which extends inclinedly between two horizontally extending shaker shaft portions (10).

2. A shaker shaft according to claim 1 characterised in that the inclinedly extending shaker shaft portion (12) has a bearing ring (26), the centre line of which is on the geometrical centre line (8) of the shaker shaft (2).

3. A shaker shaft according to claim 2 charcterised in that the bearing ring (26) is of a split or one-piece configuration.

4. A shaker shaft according to claim 1 characterised in that the inclinedly extending shaker shaft portion (12) has a crank portion (32) having a bearing surface (34) which extends parallel to the geometrical centre line (8).

5. A shaker shaft according to claim 1 characterised in that the additional bearing (24) is in the form of a rolling bearing.

**Revendications**

1. Arbre de secoueur coudé d'un seul tenant (2) comportant des tronçons d'arbre de secoueur orientés horizontalement (10) et des tronçons inclinés (12) pour l'entraînement de plusieurs secoueurs (16) disposés les uns à côté des autres, pour une moissonneuse-batteuse dans les parois latérales (4, 6) de laquelle les extrémités de l'arbre de secoueur (2) sont montées à rotation, l'arbre de secoueur (2) prenant appui entre ses deux paliers extérieurs dans au moins un palier supplémentaire (24) dont l'axe médian se trouve sur l'axe géométrique médian (8) de l'arbre de secoueur (2) et dont la surface de portée (28, 34) est parallèle à cet axe géométrique médian (8), caractérisé en ce que le palier supplémentaire (24) reçoit le tronçon d'arbre de secoueur incliné (12) disposé entre deux tronçons d'arbre de secoueur orientés horizontalement (10).

2. Arbre de secoueur suivant la revendication 1, caractérisé en ce que le tronçon incliné (12) de l'arbre de secoueur comporte une bague de palier (26) dont l'axe médian se trouve sur l'axe géométrique médian (8) de l'arbre de secoueur (2).

3. Arbre de secoueur suivant la revendication 2, caractérisé en ce que la bague de palier (26) est subdivisée ou d'un seul tenant.

4. Arbre de secoueur suivant la revendication 1, caractérisé en ce que le tronçon d'arbre de secoueur incliné (12) présente un décrochement ou une partie coudée (32) muni d'une surface de portée (34) orientée parallèlement à l'axe géométrique médian (8).

5. Arbre de secoueur suivant la revendication 1, caractérisé en ce que le palier supplémentaire (24) se présente sous la forme d'un palier à roulement.

FIG. 1

FIG. 2

FIG. 3